## Europäisches Patentamt
## European Patent Office
## Office européen des brevets

(11) Numéro de publication: **0 112 430**
**B1**

(12) # FASCICULE DE BREVET EUROPEEN

(45) Date de publication du fascicule du brevet:
**22.06.88**

(51) Int. Cl.⁴: **G 06 K 15/08, B 41 J 9/26**

(21) Numéro de dépôt: **82430050.3**

(22) Date de dépôt: **28.12.82**

(54) **Système de commande de la restauration des marteaux d'une imprimante.**

(43) Date de publication de la demande:
**04.07.84 Bulletin 84/27**

(45) Mention de la délivrance du brevet:
**22.06.88 Bulletin 88/25**

(84) Etats contractants désignés:
**DE FR GB IT NL**

(56) Documents cités:
**EP - A - 0 011 095**
**EP - A - 0 021 722**
**US - A - 4 275 653**

**IBM TECHNICAL DISCLOSURE BULLETIN, vol. 24, no. 9, février 1982, pages 4705-4706, New York, USA R.E. GIBB et al.: "Variable control of print hammer on-time"**
**IBM TECHNICAL DISCLOSURE BULLETIN, vol. 24, no. 4, septembre 1981, pages 2131-2132, New York, USA G.R. WESTCOTT: "Print hammer settle control"**

(73) Titulaire: **International Business Machines Corporation, Old Orchard Road, Armonk, N.Y. 10504 (US)**
(84) Etats contractants désignés: **DE GB IT NL**

(73) Titulaire: **Compagnie IBM FRANCE, 5 Place Vendôme, F-75000 Paris 1er (FR)**
(84) Etats contractants désignés: **FR**

(72) Inventeur: **de la Salle, Christian, 6 rue du Bel Air, F-91000 Evry (FR)**
Inventeur: **d'Hervilly, Guy André, 4 Parc de la Theuillerie, F-91120 Ris-Orangis (FR)**

(74) Mandataire: **Klein, Daniel Jacques Henri, Compagnie IBM France Département de Propriété Intellectuelle, F-06610 La Gaude (FR)**

## Description

La présente invention concerne principalement un système de commande de la restauration (ou retour) des marteaux d'une imprimante à courroie, après que l'ordre de frappe ait été donné.

Dans une imprimante standard à impact du type à courroie, celle-ci ne s'arrête jamais, cette courroie porte les caractères et défile entre les marteaux et le papier. Pour chaque caractère à imprimer, il faut calculer avec précision l'instant où le marteau vient frapper la courroie, et le temps de sa restauration, afin qu'il reste un temps déterminé, précis mais variable selon le caractère visé sur la courroie. Les imprimantes de ce genre demandent donc un organe de calcul et de commande rapide par exemple un micoprocesseur. L'intervalle de temps qui sépare l'instant où l'ordre est donné de frapper un marteau déterminé et celui où il frappe effectivement la courroie est appelé temps de vol. L'instant où le marteau frappe la courroie est le temps de frappe ou $t_{set}$, en outre le marteau doit rester un temps déterminé sur la courroie, avant d'être restauré (ou remis en place). Le temps où s'effectue la restauration (ou le retour) est le $t_{reset}$. Le temps qui s'écoule entre l'ordre de frappe d'un marteau et l'ordre de retour de ce même marteau s'appelle temps de cycle. La longueur effective de commande détermine la force avec laquelle le marteau vient frapper le papier et elle est variable selon le caractère et l'épaisseur du papier. Sur ce point, un exemple connu de réalisation se trouve décrit dans l'IBM TDB, vol. 24, no 9, février 1982, pp. 4705–4706, dans un article intitulé «Variable control of print hammer on time» par R.E. Gibb et al. Le microprocesseur calcule et introduit dans une table toutes les compensations possibles. Le temps de vol par exemle est très sensible à la température et par suite à la durée de fonctionnement de l'imprimante. La précision des $t_{set}$ et $t_{reset}$ doit être extrême, en ce qui justifie l'emploi du microprocesseur.

Le microprocesseur calcule les adresses des marteaux à commander; en fonction de la ligne de caractères à imprimer, puis selon l'adresse et les conditions de fonctionnement, il calcule les temps $t_{set}$ et $t_{reset}$ correspondants et les rentre par paquets dans une mémoire tampon d'où ils sont extraits pour la frappe des marteaux.

Cette mémoire tampon est organisée en file d'attente, c'est-à-dire qu'elle est du type FIFO (First In, First Out). Elle contient dans une première partie, des instructions d'impression concernant: le défilement du papier, la rotation de la courroie, la frappe et la restauration des marteaux, etc.; codées par exemple en seize bits; chacune de ces instructions de type (A, C) est formée dans cet exemple par la concaténation d'un champ de 8 bits représentant le code opération C, avec un autre champ de 8 bits représentant le codage binaire des adresses A des marteaux à frapper ou à remettre en place. Dans une autre partie, la FIFO contient, en correspondance biunivoque avec la première partie, les temps auxquels les différentes instructions doivent être exécutées. Cette FIFO est appelée FIFO principale, car elle est la Source principale d'instructions (SPI).

Mais ce système classique présent des inconvénients car le microprocesseur doit calculer à la fois les temps d'établissement (ou de frappe) et de restauration (ou de retour), et donner les ordres en conséquence. Or, le calcul du temps de restauration se déduit directement du $t_{set}$ et ne dépend pas des fluctuations intermédiaires des vitesses, températures, de l'imprimante. Il vaudrait mieux le déterminer au moment réel de la frappe du marteau. Cela suppose de pouvoir découpler les horloges auxquelles se réfèrent d'une part les ordres de frappe, et d'autre part les ordres de restauration. En effet, les ordres de frappe sont réglés par un signal dont la régularité est affectée au gré des paramètres physiques du moment de la frappe.

Au contraire, les ordres de retour doivent se déduire par un retard rigoureusement exact à partir du moment où a été envoyé l'ordre de frappe correspondant. Il ne doit donc pas être impacté par des fluctuations quelconques intervenant entre l'ordre de frappe et celui de retour.

Le problème étant posé, la demanderesse a donc pensé, libérer le microprocesseur de cette tâche et synchroniser le moment de retour du marteau à son moment de frappe en utilisant une ligne à retard physique, c'est-à-dire que les adresses des marteaux à restaurer seraient entrées dans une telle ligne à retard, et ne seraient disponibles qu'après un délai approprié.

Cependant l'utilisation d'une ligne à retard physique, était incompatible avec l'obligation d'établir une priorité entre les instructions sortant de ladite ligne à retard, essentiellement des instructions de retour-marteaux venant d'une source dite Source secondaire d'instructions (SSI) qui sera explicitée ci-après, et celles sortant de la FIFO principale, c'est-à-dire comme on l'a vu, toutes les autres instructions concernant le papier, la courroie, la frappe des marteaux, etc.

En effet ces deux sortes d'instructions asynchrones doivent être délivrées à un registre d'instruction unique de l'imprimante, pour y être décodées et exécutées. Il peut se produire que deux instructions différentes, par exemple frappe d'un marteau M et retour d'un marteau M', arrivent simultanément sur le registre d'instruction, ce qui est bien sûr inacceptable. Ainsi l'absence, dans cette première solution, de tout dispositif permettant de gérer les priorités (à moins de concevoir un gigantesque circuit tampon), démontre que l'utilisation d'une telle ligne à retard est impossible.

Par ailleurs, on pourrait également penser à l'utilisation d'une batterie de registres à décalage, déclenchables à volonté par une même horloge et par suite susceptibles d'être synchronisés. Auquel cas, la gestion des priorités dont il a été fait mention ci-dessus, serait possible mais fort coûteuse. De plus l'inconvénient majeur de cette solution résiderait dans le fait qu'une telle batterie exigerait une surface très importante de silicium pour être intégrée, enfin la puissance électrique consommée serait très importante.

L'idée de base de la présente invention consiste donc à retirer au microprocesseur et à ses dispositifs d'entrée/sortie, les commandes de restauration, ceci, afin de gagner aussi bien en temps machine, qu'en charge de ses dispositifs d'Entrée/Sortie grâce à l'économie faite sur l'envoi des ordres de restauration par les lignes d'Entrée/Sortie du microprocesseur. Pratiquement, l'implémentation de la présente invention permet de réduire de moitié, le nombre d'instructions à stocker dans la SPI. On aurait pu envisager la résolution de ce problème, par programmation mais on sait qu'une solution câblée sur le silicium permet de gagner considérablement en souplesse et en rapidité.

L'invention est basée sur les constatations suivantes:

a) le temps de cycle est le même pour tous les marteaux; il doit être programmable, lors de la mise sous tension de l'équipement;

b) le temps de restauration $t_{reset}$ est synchronisé avec le temps effectif d'établissement $t_{set}$ et celui-ci est impacté par les flucuations de la machine. Par contre, dès lors que le marteau a été frappé, son instant de retour ne dépend plus des fluctuations ultérieures et nécessite und grande précision...

c) il peut donc être indépendant du mouvement de la courroie;

d) cependant, cette grande précision concerne uniquement l'échelle de temps, dans laquelle évoluent les marteaux, échelle plus grossière que l'échelle de temps «électronique» avec laquelle le système élabore les ordres de restauration. Par suite, une certaine souplesse en résulte, permettant ainsi d'introduire une gestion de priorités entre les ordres de frappe et les ordres de retour des marteaux de l'imprimante,

e) par ailleurs avec une telle conception, la mémorisation des codes opérations correspondants aux adresses des marteaux à restaurer est inutile, car le code C est implicitement C = Retour.

Ecartant les solutions de l'art antérieur pour les raisons sus-mentionnées, la demanderesse a résolu le problème de la manière indiquée dans la revendication 1. Elle a développé un système de commande de la restauration des marteaux d'une imprimante à courroie, facilement intégrable dans le silicium.

De manière connue, un organe de calcul remplit une source principale d'instructions (SPI) avec des instructions de la forme A (adresse), C (code opération) qui concernent l'imprimante et qu'il a préalablement élaborées.

A partir de là, le système de la présente invention assure:

La prise en charge des instructions relatives à la restauration des marteaux sans l'intervention de l'organe de calcul. Il leur applique un retard déterminé programmable, en synchronisant le moment de retour au moment effectif de la frappe. Enfin il assure le contrôle des accès à l'imprimante représentée par son registre d'instructions, selon des règles de priorité pré-établies.

Le système de la présente invention comporte donc:

– des moyens de comptage binaire du type cyclique qui fournissent en permanence un mot binaire (Y, Z) comprenant, d'une part une information temporelle (Y) reprenant la même valeur à chaque cycle et d'autre part une information de masquage (Z) changeant de valeur à chaque cycle;

– des moyens d'emmagasinage, du genre mémoire organisée en file d'attente formant une source secondaire d'instructions (SSI) pour l'emmagasinage simultané du mot binaire (Y, Ž) obtenu par la complémentation de l'information de masquage du mot binaire (Y, Z) préalablement defini et de l'adresse A du marteau à restaurer qui lui correspond;

– des moyens de comparaison qui comparent en permanence le mot binaire (Y', Ž') disponible à la sortie de la SSI et le mot binaire (Y, Z) disponible à la sortie des moyens de comptage et qui fournissent en sortie un signal de niveau déterminé, quand il y a identité entre les deux mots;

– des moyens de commande et de contrôle qui reçoivent: la sortie des moyens de comparaison, la sortie relative aux codes instructions contenues dans la source principale d'instructions (SPI), la sortie relative aux adresses contenues dans la source secondaire d'instructions, et qui contrôlent l'accès à l'imprimante en gérant les priorités entre les instructions (A, C) fournies par la source principale d'instructions et les instructions (A', Retour implicite) fournies par la source secondaire d'instructions, quand ces dernières sont reconnues disponibles par ledit signal de niveau déterminé.

Dans un mode de réalisation avantageux, lesdits moyens d'emmagasinage sont constitués par une mémoire du type à accès aléatoire (RAM), organisée en file d'attente. Une telle mémoire permet un stockage quasi immédiat dans la première position libre.

La figure 1 représente l'architecture générale du système de commande de la présente invention.

La figure 2 représente un exemple d'implémentation desdits moyens de commande et de contrôle de l'accès à l'imprimante.

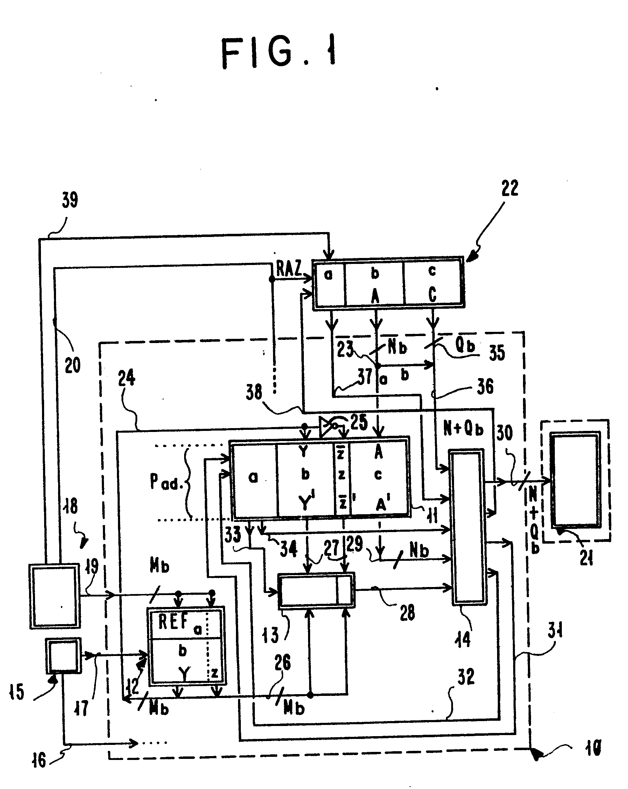

Le système de commande est représenté dans l'encadré en pointillés sur la figure 1 où il porte la référence 10. Il comprend essentiellement: une mémoire 11 à accès aléatoire (RAM) organisée en file d'attente (en anglais FIFO: First In, First Out) qui constitue la source secondaire d'instructions (SSI) dont la capacité P × R bits est fonction de l'imprimante utilisée. Un compteur cyclique programmable 12 de M bits, un circuit de comparaison logique 13 de M bits et un circuit logique 14 qui remplit la fonction de contrôleur d'accès à l'imprimante (CAI).

On a figuré à l'extérieur du système 10 divers organes périphériques qui ne font pas partie de l'invention mais sont néanmoins moins utiles pour son intelligence.

Tout d'abord, un oscillateur 15, qui fournit au dispositif 10 des signaux d'horloge par les lignes 16 et 17.

Un premier signal (ligne 16) constitue en fait le signal d'horloge général du système 10 considéré comme synchrone. Cela signifie que tous les organes du système 10 sont synchronisés entre eux, par cette horloge dont la période, durée séparant deux impulsions successives, constitue l'unité de temps de tout le dispositif. Toute autre durée jouant un rôle dans le fonctionnement du dispositif, est nécessairement un multiple entier de cette période. En outre, chacune des commandes possibles, relative à une certaine période s'élabore à l'intérieur d'un organe (appelé organe source), soit interne au système 10, soit externe, puis est ensuite prise en compte dans un organe appelé destinataire au plus tôt dans la période suivante, mais jamais dans la même période.

Un ordre de grandeur de cette période du dispositif 10 est de l'ordre de grandeur de la microseconde.

Le second signal sur la ligne 17 est appliqué au compteur programmable 12 dont il assure la marche (dans le sens d'une décrémentation); ce signal est appelé le tic.

On appelle donc tic, l'impulsion qui commande la décrémentation du compteur 12b. L'intervalle de temps séparant deux tics successifs définit la granularité de l'horloge interne du système, pendant cet intervalle il est toujours temps de frapper (ou restaurer) un marteau, sans nuire à la qualité de l'impression. Cela peut représenter de 1 à 20 fois la période du dispositif.

Le compteur 12b ne se décrémente donc pas à chaque période mais seulement pendant chacune de celles où une impulsion sur la ligne 17 est présente, c'est-à-dire à chaque tic.

Ensuite un organe de commande 18, par exemple un microprocesseur, fournit au système 10, par le bus 19, un mot binaire de M bits, lequel est transmis en parallèle à la partie REF 12a du compteur 12, dont il caractérisera la rotation. On appellera cycle, le temps mis par le compteur 12 pour effectuer une rotation complète. Un des M bits, appelé bit Z permettra de distinguer deux cycles successifs.

En outre l'organe de calcul 18 fournit par le bus 20 un signal RAZ (Remise A-Zero générale) à tous les organes de la machine.

L'imprimante est représentée par son registre d'instructions 21.

Enfin, la source principale d'instructions SPI est référencée en 22. On a vu que la SPI recevait des instructions du microprocesseur 18 qui les avait préalablement élaborées sous la forme de mots du type (A, C) où A représente une adresse de marteaux, et C un code opération (frappe, retour des marteaux, etc.); à noter que certains codes opération ne sont pas accompagnés d'une adresse (avance papier, commande de la courroie...). La SPI 22 est une mémoire à accès aléatoire oganisée en file d'attente; les organes périphériques, et notamment l'organe de calcul 18 et la SPI 22 reçoivent un signal d'horloge qui suit les fluctuations des paramètres mécaniques (température de fonctionnement de la machine...) conformément au principe explicité plus haut.

La partie REF 12a permet d'assurer la programmation du compteur programmable 12.

En effet, ce compteur fonctionne normalement selon un principe de décrémentation «cyclique», c'est-à-dire qu'il se décrémente de 1 à chaque tic, à partir de sa valeur maximale. Par exemple dans le cas d'un compteur où M = 4 bits, il passe de 1111 à 0000 en 16 tics, par décrémentations successives pour repasser à sa valeur maximale 1111 au tic suivant en entamant la rotation suivante selon un principe de rotation sans fin.

Mais le microprocesseur 18 peut grâce à cette entrée REF forcer par le bus 19 une valeur intermédiaire, par exemple 1001, ce qui ne représente plus que 10 coups d'horloge ou tics pour repasser à 0000. Chaque fois que le compteur passe à 0000, c'est-à-dire à 0 plein, on ne repasse plus par 1 plein (1111) mais on revient à cette valeur intermédiaire, 1001 et on continue à décrémener à partir d'elle. Le microprocesseur peut donc contrôler la durée de chaque rotation du compteur par la valeur qu'il introduit dans la partie REF 12a.

Une rotation complète est donc appelée un cycle. En pratique le cycle représente bien le temps qui doit s'écouler entre l'ordre de frappe du marteau et l'ordre de retour du même marteau, et on a vu que ce temps pouvait être fixé à une valeur unique pour tous les marteaux d'une imprimante donnée. Un ordre de grandeur typique de ce cycle est de quelques millisecondes. En principe donc, le microprocesseur chargera dans REF la même valeur une fois pour toute. Néanmoins, cette possibilité des programmes des temps différents, est une caractéristique secondaire intéressante de l'invention, car elle confère au système 10, une fois intégré dans une microplaquette de silicium, la capacité de s'adapter à des imprimantes différentes voire de type et de conception différents.

Le compteur 12 est réalisé de telle sorte qu'il fournit deux informations binaires. La première, appelée Y représente une information temporelle qui reprend la même valeur à chaque cycle et change de valeur a chaque tic, la deuxième est une information de masquage constituée par le bit Z dont il a été fait mention ci-dessus, qui change de valeur à chaque cycle.

Le compteur à M bits peut parfaitement fournir ces deux informations Y et Z simultanément. Il suffit de considérer que Z est le bit le plus significatif des M bits, en d'autres termes que les mots binaires (Y, Z) figurent dans le compteur 12, selon une notation binaire inversée.

La première fois que l'on chargera (lors de l'initialisation de la machine), le compteur 12. on emmagasinera la même valeur:

$$REF. = Y[MAX]$$

dans 12a et 12b simultanément avec en outre la valeur «0» dans le bit Z de 12b. A partir de cet instant, le compteur 12b effectue une décrémentation par TIC jusqu'au passage à zéro. Au tic suivant ce passage à zéro, on chargera la valeur REF de 12a dans Y de 12b cependant que Ž sera mis à la place de Z puis Y continuera ses décrémentations jusqu'à zéro, etc. en une suite infinie de décrémentations dites rotatives où Y reprend la même valeur à chaque cycle mais où Z s'inverse à chaque cycle et par suite (Y, Z) reprend la même valeur tous les deux cycles.

Par exemple, admettons que l'on souhaite qu'un cycle = 4 tics, on peut utiliser un compteur avec M = 4 bist = 3 + 1 bits, en chargeant la REF avec la valeur 3, et en chargeant la valeur de Z initialisée tous les cycles. L'évolution du contenu du compteur en notation binaire inversée est donc la suivante:

| Y | | Z | | |
|---|---|---|---|---|
| —v— | | —v— | | |
| LSB | | MSB | | |
| 1 | 1 | 0 | 0 | |
| 0 | 1 | 0 | 0 | |
| 1 | 0 | 0 | 0 | 1er cycle |
| 0 | 0 | 0 | 0 | |
| 1 | 1 | 0 | 1 | |
| 0 | 1 | 0 | 1 | |
| 1 | 0 | 0 | 1 | 2e cycle |
| 0 | 0 | 0 | 1 | |

Le principe de fonctionnement du système 10 peut être compris de la façon suivante.

Chaque fois que la SPI 22 commande la frappe d'un marteau, par exemple celui d'adresse A, qui et contenue dans la partie 22b, cette adresse est transférée sous la forme d'un mot binaire de N bits par le bus 23a, dans la partie droite 11c de la SSI 11, pour y être emmagasinée. Il est inutile d'enregistrer un code opération avec cette adresse, puisque ce code est nécessairement C = retour. Simultanément, le contenu 12b du compteur 12, soit un mot binaire (Y, Z) de M bits est emmagasiné, après transfert par le bus 24 et complémentation du bit Z dans l'inverseur 25, dans la partie b + z de la SSI 11, donc sous la forme (Y, Ž). Le stockage du mot (Y, Ž, A) dans la SSI 11 se fait sous le contrôle du CAI 14 par des fils de commande comme nous le verrons ci-après.

On remarque que si le contenu du compteur 12b est transféré épisodiquement (en fait, à chaque frappe de marteau) à la SSI 11 par le bus 24, il est également appliqué en permanence au comparateur 13 par le bus 26 sous sa forme normale (Y, Z).

Ainsi pour chaque ligne occupée de la SSI, parmi les P possibles, on associe à chaque adresse binaire d'un marteau, par exemple A, les valeurs correspondantes Y et Ž du contenu du compteur 12b. Y représente à la fois: le temps «passé» qui se trouvait dans ledit compteur 12b au moment de la frappe du marteau A et le temps «futur» qui s'y trouvera de nouveau au moment de la restauration (ou retour) du même marteau A, mais un cycle plus tard (à cause du bit Z, puisque la valeur du bit Z est changée à chaque rotation du compteur).

Ce bit Z est donc bien le bit de différenciation de cycle. Finalement, chaque ligne de la SSI 11 contient une information du type (Y, Ž, A).

Selon le contenu de la SSI 11, le mot binaire (Y, Ž, A) va se retrouver plus ou moins vite à la sortie, c'est-à-dire en position (Y', Ž', A'). Cette sortie alimente en permanence le comparateur 13 au moyen du bus 27 avec sa partie temporelle (Y', Z').

Ainsi, chaque fois que le temps affiché au compteur 12b dans le cycle présent soit (Y, Z) est égal au temps passé (emmagasiné au cycle précédent), à savoir (Y', Ž'), le comparateur reçoit deux mots binaires identiques Y' = Y et Ž' = Z. Le comparateur fournit alors un signal de niveau approprié sur la ligne 28, au CAI 14, qui fonctionne en partie, comme une porte logique. A la réception de ce signal, le CAI 14 s'ouvre et laisse transférer l'adresse A' de la SSI 11 disponible sur le bus 29 vers l'imprimante (représentée en fait par son registre d'instructions 21) par le bus 30. Au passage, on comprendra que le CAI 14 lui restitue automatiquement le code opération C = RETOUR. En réalité le CAI 14 joue un rôle plus complexe que celui d'une simple porte, c'est en fait un véritable contrôleur de communications qui contrôle et commande totalement les SPI et SSI et en particulier, il gère les conflits d'accès à l'imprimante 21 dans les cas où les deux sources d'instructions, à savoir la SPI 22 (source principale) et la SSI 11 (source secondaire) ont toutes les deux, une instruction disponible à transférer vers l'imprimante, et cela en fonction d'un schéma de priorités établi et câblé une fois pour toute. Le rôle du CAI 14 sera explicité plus en détail ci-après.

La SSI 11 qui est, comme on l'a dit, une mémoire à accès aléatoire organisée en file d'attente (FIFO) reçoit et émet deux types d'informations:
- elle reçoit constamment des données du type (Y, Ž, A) dont on a parlé plus haut, par le biais des bus 23a et 24;
- elle émet constamment des données du même type (Y', Ž', A') sur les bus 27 + 29;
- elle reçoit deux commandes impulsionnelles et calibrées en temps par les fils 31 (impulsion dite de chargement) et 32 (impulsion dite de déchargement);
- elle émet enfin deux indicateurs d'état: «vide» sur le fil 33, et «plein» sur le fil 34. A noter que par le fil 33 on inhibe le comparateur 13 quand la SSI 11 est vide.

De plus, le mot de données d'entrée (Y, Ž, A), à M + N bits, n'est effectivement emmagasiné dans la SSI 11 (c'est-à-dire incorporé à la file d'attente) que pendant l'impulsion de chargement fournie par le fil 31 durant laquelle il doit absolument rester stable. Il ne peut rien entrer dans la SSI tant que le fil 31 est inactif (à 0). D'une manière similaire, le mot de donnée de sortie (Y', Ž', A') reste identique à lui-même, tant que le fil de commande 32 (déchargement) reste à 0 (repos); par contre dès que le fil 32 est porté au niveau 1 à l'occasion d'une impulsion de déchargement fournie par le CAI 14, le mot de sortie (Y', Ž', A') se trouve perdu car il est instantanément écrasé, par le mot qui le suivait immédiatement dans la file d'attente, par exemple (Y'', Ž'', A''), cependant qu'une place supplémentaire devient disponible dans le «haut» de la file d'attente. Deux cas limites doivent alors être envisagés:
- au moment d'un chargement: si à un moment donné, P − 1 places de la file d'attente sont déjà occupées, après un chargement supplémentaire, toutes les P places disponibles de la file d'attente seront alors occupées et le fil de sortie 34 (plein) passera à 1, indiquant par là que la SSI 11 n'est plus capable de recevoir la moindre information supplémentaire (du moins tant que l'information de sortie n'aura pas été déchargée, c'est-à-dire écrasée par l'information immédiatement suivante); dans tout autre cas, le fil 34 reste constamment à zéro;
- au moment d'un déchargement, si à un moment donné, une et une seule place se trouve occupée dans la SSI 11, après le déchargement, la file d'attente deviendra entièrement vide et, par suite, le fil 33 (vide) passera à 1, indiquant par là que la SSI 11 n'est plus capable d'émettre sur le bus de sortie 27 et 29 la moindre information valide (c'est-à-dire qui ait un sens logique); dans tout autre cas, le fil 33 reste constamment à zéro;

– enfin la configuration

$$\text{plein } (34) = 1 = \text{vide } (33)$$

est matériellement impossible parce que logiquement vide de sens.

La SPI 22 est également une mémoire à accès aléatoire organisée en file d'attente.

Une information électronique, stable ou non, existe constamment à sa sortie, c'est-à-dire sur les bus 23 et 35 (ou 36). Tant que le niveau du fil de sortie 37 (valide) est à la valeur 1, la stabilité et la validité de cette information sont garanties. C'est donc seulement lorsque ce fil 37 est au niveau 1 que l'information à N + Q bits, du bus 36 (qui rassemble les bus 23 et 35) peut être interprétée comme une instruction principale, non seulement stable mais de plus destinée à être envoyée dès que possible à l'imprimante 21. Enfin, quand le fil d'entrée 38 est porté au niveau 1, la SPI 22 reçoit l'ordre de passer à l'instruction suivante, ce qui déclenche la perte de l'instruction présente, par exemple (A, C), et son remplacement, plus exactement son «écrasement», par l'instruction suivante, par exemple (A¹, C¹). Quand le fil 38 est au niveau 0, la SPI 22 reconnaît que ses données n'ont pas été utilisées (par exemple parce que la SSI 11 est pleine, état qui est indiqué par le fil 34). Pendant toutes les transitions et à cause de la fluctuation des niveaux sur les fils de sortie 36 = 23 + 35 qui en résulte, le fil d'état 37 (valide) ne peut que rester à 0; en outre, même lorsque la stabilité est revenue sur le bus, ce fil 37 (valide) peut parfaitement rester à 0, pour ne passer à 1 que bien plus tard; par exemple à un instant ultérieur décidé par le microprocesseur 18, comme étant celui à partir duquel l'imprimante 21 peut commencer à exécuter l'instruction (A¹, C¹) alors disponible. Cet ordre est transmis à la SPI 22 au moyen du fil 39. Rappelons en effet, que le fil 37 (valide), lorsqu'il passe à 1, garantit non seulement la stabilité électronique du bus de sortie 36, mais de plus traduit l'intention de la SPI 22 d'envoyer dès que possible l'instruction qui s'y trouve codée, vers l'imprimante 21, pour y être exécutée.

Des mémoires à accès aléatoire (RAM) organisée en file d'attente (FIFO), qui peuvent être utilisées dans la présente implémentation des sources principales et secondaires d'instructions sont décrites dans l'article suivant: «Organize RAMs as FIFO Buffers with an LSI Controller Chip» par J. Seltzer paru dans Electronic Design, 30 septembre 1981, pages 209–216.

On peut maintenant compléter la description par le détail du fonctionnement du CAI 14, qui est le contrôleur d'accès à l'imprimante. Véritable cerveau du système 10 puisque, stimulé par l'état des sources principales 22 et secondaire 11 d'instructions, il va en retour agir sur elles en gérant toutes leurs demandes d'accès à l'imprimante 21 en fonction de règles de priorité, établies une fois pour toutes.

Il reçoit et émet les informations suivantes:

– par le bus 36 à N + Q bits, le CAI 14 (Contrôleur d'Accès à l'Imprimante) dispose en permanence d'une instruction (A, C) en provenance de la SPI 22;

– grâce au fil de commande 37 (valide), il dispose d'une mémoire en ce qui concerne la validité de l'instruction précédente, selon le niveau présent sur ce fil:

– si ce dernier est à 0, cela signifie que l'information électronique disponible sur le bus 36 est vide de sens et qu'elle peut même éventuellement fluctuer;

– si au contraire il est à 1, l'information électronique disponible sur le bus 36 est non seulement stable, mais est une véritable instruction destinée, dès que possible, à l'imprimante 21.

Par le bus 29, il dispose en permanence d'une adresse A' à N bits en provenance de la SSI 11 qui est la source secondaire d'instructions.

Par le fil de commande 28, il dispose d'une «mémoire» de validité pour l'adresse précédente, à savoir le résultat de la comparaison (Y, Z) = (Y', Ž'):

– s'il est au niveau 0 cela signifie que le bus 29 apporte une information électronique vide de sens et qui peut même éventuellement fluctuer;

– si au contraire, il est au niveau 1, alors non seulement le bus 29 reste constamment stable mais de plus, il représente la véritable adresse A', d'un marteau à restaurer dans l'imprimante 21.

Enfin le fil 34 (plein), quand il est actif (à 1), apporte une information supplémentaire de contrôle destinée à bloquer impérativement et exclusivement toute éventuelle instruction de frappe, en provenance de la SPI 22. Ceci en raison de l'impossibilité, qu'il y a alors, d'incorporer toute nouvelle information à la file d'attente de la SSI 11 puisque cette dernière est pleine.

Il élabore enfin les signaux disponibles sur les fils 31, 32 et 38 dont les rôles ont été explicités plus haut.

Dans son principe, le CAI 14 est essentiellement un multiplexeur, auquel on a ajouté des fonctions de commande et de contrôle dans le cas où des conflits de priorité sont à gérer. Avec le descriptif de sa fonction, l'homme de métier est à même de la réaliser sans difficulté.

Il est clair que le CAI 14 peut être câblé pour n'importe quel autre schéma de priorité, si compliqué soit-il, et cela en fonction de n'importe quel code opération C choisi avec n'importe quel nombre de bits Q, sans pour autant sortir du cadre de la présente invention.

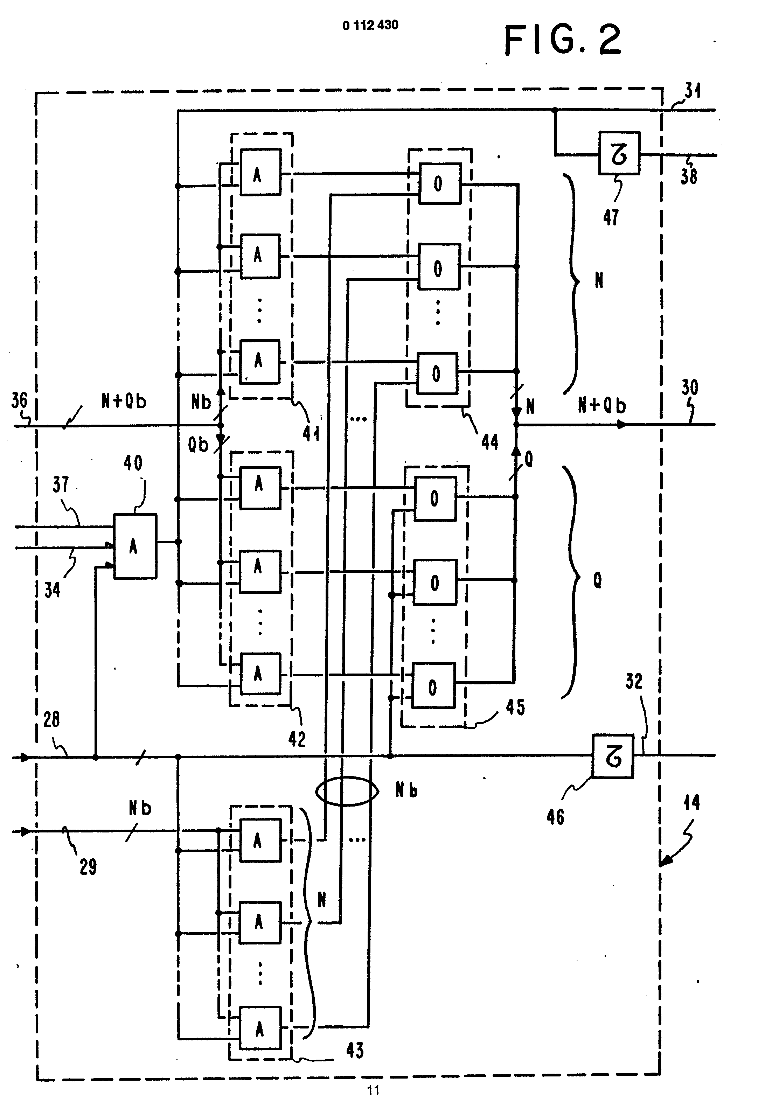

Cependant on a représenté sur la figure 2 un mode de réalisation possible qui illustre directement ce qui a été dit ci-dessus mais en faisant les hypothèses de travail suivantes, quant à la définition des N + Q bits disponibles sur le bus 30:

Quand les Q bits correspondant au code opération C, sont tous au niveau 1, cela signifie que C = retour et quand ces Q bits sont tous au niveau 0 cela signifie que la ligne 30 est inactive. En outre, on considère qu'un ordre de retour a priorité sur les autres ordres.

Le circuit ET 40 (noter que les signaux fournis par les fils 28 et 34) sont inversés avant d'attaquer ce circuit), assure la gestion de priorité par ce que reliés aux fils d'état 34 et 37 de la SSI et de la SPI, et à la sortie du comparateur 13 par le fil 28.

Par exemple admettons que la ligne 28 soit au niveau 1, c'est-à-dire que les N bits de l'adresse A' sont disponibles en sortie de la SSI 11 sur le bus 29 (figure 1). On a un 0 logique en sortie du circuit 40 (qui est donc indifférent dans ce cas aux états de la SSI et de la SPI), et on a par suite un 0 logique en sortie des N portes ET 41 et des Q portes ET 42.

Par ailleurs, le niveau 1 de la ligne 28 est également appliqué sur les N portes ET 43 qui reçoivent aussi les N bits de l'adresse A', cette dernière est donc recopiée en sortie de ces portes et ses bits appliqués à chacune des N portes OU 44, dont une borne est maintenue au potentiel 0, les bits de l'adresse A' se retrouvent donc sur le bus 30.

Simultanément chacune des Q portes OU 45 dont une entrée est maintenue à 0 reçoit sur l'autre entrée, un 1 logique provenant de la ligne 28, on retrouve donc en sortie de chacune des portes un «1» logique.

Sur le bus 30, on trouve alors (A', 111...1) en d'autres termes l'instruction (A', retour).

Les blocs 46 et 47 sont des circuits qui introduisent un retard nécessaire pour tenir compte des délais d'exécution de ces opérations.

Le CAI 14 décode en effet chaque code opération C de la SPI pour savoir si C = frappe, si c'est le cas, il teste la SSI 11 pour savoir s'il peut emmagasiner l'adresse A. Il peut également transférer directement certaines instructions (telles que avance papier, commande courroie, etc.), du bus 36 au bus 30 pour exécution dans le registre 21.

Ce qui est important à comprendre c'est que plusieurs instructions principales (A, C) peuvent avoir un objectif théorique de simultanéité, c'est-à-dire se dérouler ensemble en parallèle, au niveau de leur exécution dans l'imprimante 21, tout en étant, en fait, émises successivement dans le temps, c'est-à-dire une à une en série, au niveau de l'une quelconque des deux sources d'instructions 22 et 11. En effet, ces instructions concernent essentiellement des phénomènes mécaniques qui, aussi rapides soient-ils, resteront toujours «infiniment lents» relativement aux vitesses électroniques en particulier au regard de la période de l'ordre de la microseconde mentionnée ci-dessus. Par suite, un certain nombre (de une à deux douzaines environ) d'instructions de frappe-marteau peuvent parfaitement être envoyées à l'imprimante 21, l'une à la suite de l'autre et avec un débit d'une par période mais à condition de concerner des marteaux distincts, sans pour autant cesser de donner l'impression que tous ces marteaux concernés sont frappés au même instant «mécanique» donc «simultanément». Par contrecoup, il faut donc prévoir que les restaurations de plusieurs marteaux distincts peuvent aussi se dérouler au même temps «mécanique», symbolisé par la même valeur affichée au compteur 12b, bien que pourtant à des périodes distinctes mais successives (et même se trouver en conflit du fait de l'asynchronisme de ces événements).

## Revendications

1. Système de commande de la restauration des marteaux d'une imprimante à courroie, caractérisé en ce qu'il comprend:

des moyens de comptage binaire (12) du type cyclique qui fournissent en permanence un mot binaire (Y, Z) comprenant, d'une part une information temporelle (Y) reprenant la même valeur à chaque cycle et d'autre part, une informtion de masquage (Z) changeant de valeur à chaque cycle,

des moyens d'emmagasinage (11), du genre mémoire organisée en file d'attente formant une source secondaire d'instructions (SSI) pour l'emmagasinage simultané du mot binaire (Y, Ž) obtenu par la complémentation de l'information de masquage du mot binaire (Y, Z) préalablement défini et de l'adresse (A) du marteau à restaurer qui lui correspond,

des moyens de comparaison (13) qui comparent en permanence le mot binaire (Y', Ž'), disponible à la sortie de la source secondaire d'instructions (SSI) et le mot binaire (Y, Z) disponible à la sortie (26) des moyens de comptage (12) et qui fournissent en sortie un signal de niveau déterminé, quand il y a identité entre les deux mots, et,

des moyens de commande et de contrôle (14) qui reçoivent: la sortie (28) des moyens de comparaison (13), la sortie (36) relative aux codes instructions (C) contenues dans une source principale d'instruction (SPI), la sortie (29) relative aux adresses (A') contenues dans la source secondaire d'instructions, et qui contrôlent l'accès à l'imprimante (21) en gérant les priorités entre les instructions (A, C) fournies par la source principale d'instructions et les instructions (A', retour implicite) fournies par la source secondaire d'instructions quand ces dernières sont reconnues disponibles par ledit signal de niveau déterminé.

2. Système de commande selon la revendication 1 caractérisé en ce que lesdits moyens d'emmagasinage (11) sont constitués par une mémoire du type à accès aléatoire (RAM) organisée en file d'attente, qui permet un stockage quasi immédiat dans la première position libre de la mémoire.

3. Système de commande selon la revendication 1 ou 2 caractérisé en ce que lesdits moyens de comptage binaire (12) comportent une partie REF (12a) qui permet de stocker un nombre binaire déterminé, compris entre 0 et la valeur maximale autorisée par le compteur, qui permet une rotation cyclique du compteur sur un sous multiple du cycle maximal.

4. Système de commande selon la revendication 3 caractérisée en ce que les informations temporelles (Y) et de masquage (Ž) sont écrites dans lesdits moyens de comptage suivant la notation binaire inversée, l'information de masquage (Z) en constituant le MSB.

**Patentansprüche**

1. System für die Steuerung der Rückstellung der Hämmer eines Druckers mit Riemen, dadurch gekennzeichnet, daß es umfaßt:

Mittel binärer Zählung (12) vom zyklischen Typ, die ständig ein binäres Wort (Y, Z) liefern, welches einerseits eine zeitliche Information (Y) enthält, die bei jedem Zyklus den gleichen Wert wieder aufnimmt, und andererseits eine Überlappungsinformation (Z), die ihren Wert mit jedem Zyklus ändert,

Speichermittel (11) vom Typ eines als Warteschlange organisierten Speichers, der eine sekundäre Anweisungsquelle (SSI) für die gleichzeitige Speicherung des binären Wortes (Y, Z) liefert, das durch die Komplementbildung der Überlappungsinformation des oben definierten binären Wortes (Y, Z) und der Adresse (A) des ihm entsprechenden zurückzustellenden Hammers gebildet wird,

Vergleichsmittel (13), welche ständig das binäre Wort (Y', Z'), das am Ausgang der sekundären Anweisungsquelle ansteht, und das binäre Wort (Y, Z), das am Ausgang 26 der Zählmittel (12) ansteht, vergleichen und am Ausgang ein Signal mit einem bestimmten Pegel abgeben, wenn die beiden Wörter identisch sind, und

Steuer- und Kontrollmittel (14), welche empfangen: den Ausgang (28) der Vergleichsmittel (13), den Ausgang (36) der Instruktionscodes (C), die in einer ersten Anweisungsquelle (SPI) enthalten sind, den Ausgang (29) in bezug auf die in der sekundären Anweisungsquelle enthaltenen Adresse (A') und die den Zugang zum Drucker (21) steuern, unter Verwaltung der Prioritäten zwischen den Anweisungen (A, C), die von der primären Anweisungsquelle geliefert werden, und den Anweisungen (A', implizierte Rückstellung), die durch die sekundäre Anweisungsquelle geliefert werden, wenn diese letzteren vom besagten Signal feststehenden Pegels als verfügbar erkannt werden.

2. Steuersystem gemäß Anspruch 1, dadurch gekennzeichnet, daß die besagten Speichermittel (11) aus einem Speicher vom Typ mit aleatorischem Zugriff (RAM-Speicher) bestehen, der als Warteschlange organisiert ist, was eine praktisch sofortige Ablegung in die erste freie Speicherposition gestattet.

3. Steuersystem gemäß Anspruch 1 oder 2, dadurch gekennzeichnet, daß die besagten binären Zählmittel (12) einen REF-Teil (12a) enthalten, der die Speicherung einer bestimmten binären Zahl gestattet, zwischen 0 und dem vom Zähler zugelassenen Höchstwert, was die zyklische Drehung des Zählers über einen Wert des maximalen Zyklus gestattet, durch den dieser teilbar ist.

4. Steuersystem gemäß Anspruch 3, dadurch gekennzeichnet, daß die zeitlichen Informationen (Y) und die Überlappungsinformation (Z) in den besagten Zählmitteln nach umgekehrter binärer Schreibweise geschrieben sind und die Überlappungsinformation (Z) das MSB dafür bildet.

**Claims**

1. A belt printer hammer resetting control system characterized in that it includes:

binary counting means (12) of the cyclic type which permanently provide a binary word (Y, Z) comprising on the one hand, a time information (Y) taking the same value on every cycle and on the other hand, a mask information (Z) changing of value on every cycle,

storing means (11) of the FIFO type forming a secondary instruction source (SSI) for simultaneously storing the binary word (Y, Z̄) obtained by complementing the mask information of the previously defined binary word (Y, Z) and address A of the hammer to be reset corresponding thereto,

comparing means (13) for permanently comparing the binary word (Y', Z̄') available from the SSI output and the binary word (Y, Z) available from output (26) of counting means (12) and which output a signal at a determined level when the two words are identical and,

control and monitoring means (14) receiving: output (28) of comparing means (13), output (36) relating to instruction codes (6) contained in a main instruction source (SPI), output (29) relating to addresses (A') contained in the secondary instruction source which control access to printer (21) by managing the priorities between instructions (A, C) provided by the main instruction source and instructions (A', implicit reset) provided by the secondary instruction source when said instructions are recognized as available by said signal at a determined level.

2. A control system as set forth in claim 1 characterized in that said storing means (11) are comprised of a random access memory (RAM) of the FIFO type which allows the first free location of said memory to be almost immediately filled.

3. A control system as set forth in claim 1 or 2 characterized in that said binary counting means (12) includes a REF portion (12a) which allow a determined binary number between 0 and the maximum value permitted by the counter, to be stored and the counter to be cyclically rotated on a submultiple of the maximum cycle.

4. A control system as set forth in claim 3 characterized in that time (Y) and mask (Z) information are written into said counting means according to an inverted binary notation, mask information (Z) being the MSB thereof.

# FIG. 1

# FIG. 2